Europäisches Patentamt

European Patent Office

Office européen des brevets

(11) Publication number: **0 137 156 B1**

(12) **EUROPEAN PATENT SPECIFICATION**

(45) Date of publication of patent specification: **14.10.87**

(51) Int. Cl.⁴: **F 04 D 27/00,** F 04 D 15/00, H 02 P 7/48

(21) Application number: **84108445.2**

(22) Date of filing: **18.07.84**

(54) **Airflow control system.**

(30) Priority: **30.07.83 JP 139571/83**

(43) Date of publication of application: **17.04.85 Bulletin 85/16**

(45) Publication of the grant of the patent: **14.10.87 Bulletin 87/42**

(84) Designated Contracting States: **CH DE GB LI**

(56) References cited: **EP-A-0 040 595**

PATENT ABSTRACTS OF JAPAN, vol. 4, no. 167, 19th November 1980
PATENT ABSTRACTS OF JAPAN, vol. 7, no. 47, 24th February 1983
PATENT ABSTRACTS OF JAPAN, vol. 6, no. 103, 12th June 1982

(73) Proprietor: **MITSUBISHI DENKI KABUSHIKI KAISHA**
**2-3, Marunouchi 2-chome Chiyoda-ku Tokyo 100 (JP)**

(72) Inventor: **Takata, Nobuharu c/o MITSUBISHI DENKI K.K.**
**Power and Ind. Systems Center 1-2, Wadasakicho**
**1-chome Hyogo-ku Kobe-shi Hyogo (JP)**
Inventor: **Kurita, Kohji c/o MITSUBISHI DENKI K.K.**
**Power and Ind. Systems Center 1-2, Wadasakicho**
**1-chome Hyogo-ku Kobe-shi Hyogo (JP)**

(74) Representative: **Eisenführ & Speiser Martinistrasse 24 D-2800 Bremen 1 (DE)**

Courier Press, Leamington Spa, England.

## Description

The present invention relates to an airflow control system comprising a pole change motor capable of varying the rotational speed by changing the number of poles carried out through the change in the magnitude or direction of a current flowing in part of stator windings; a blower driven by said motor; an air passage resistance control means provided within the air passage of said blower.

Description of the Prior Art

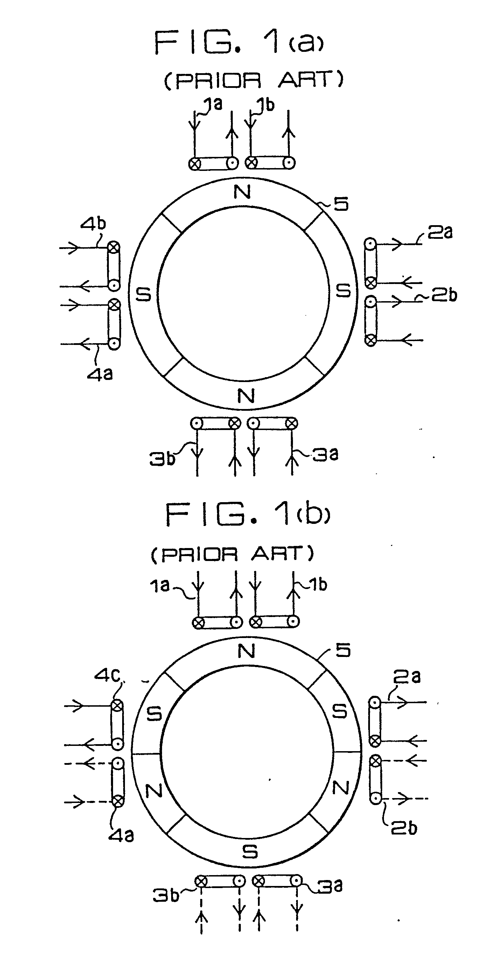

Fig. 1 shows the general principle of a pole change motor, which comprises stator windings 1a, 1b, 2a, 2b, 3a, 3b, 4a, and 4b (shown as an example for one phase) and rotor magnetic poles 5 (each pole shown by N or S).

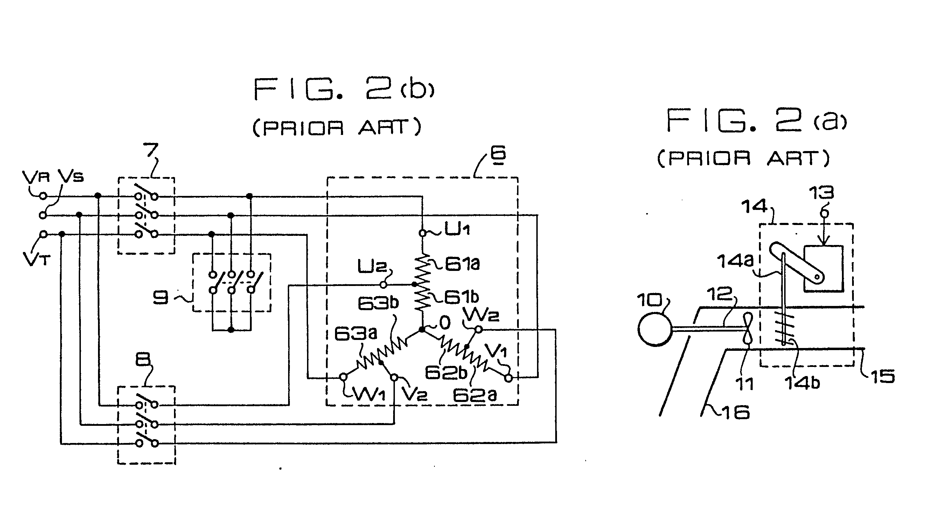

Fig. 2b shows a conventional circuit of a pole change system, as described in JP—A— 57—34797. Reference numeral 6 denotes stator windings including winding sections 61a, 61b, 62a, 62b, 63a, and 63b with terminals U1, U2, V1, V2, W1, and W2 associated thereto. Reference numerals 7, 8 and 9 denote switches, $V_R$, $V_S$ and $V_T$ the voltages of 3-phase power lines R, S and T, O the neutral point of the stator winding.

Fig. 2a shows an air flow resistance control system as described in JP—A—58—26924. Reference numeral 10 is a rotor of the pole change motor, 11 a blower, 12 a shaft connecting the motor 10 and blower 11, 14 an airflow adjustment device in which a bar 14a is operated vertically to move a damper 14b so that the air passage resistance is varied, 13 a control signal indicating the opening of the damper 14b, and 15 and 16 the inlet side and outlet side of the air passage, respectively.

Fig. 1(a) shows, as an example, the arrangement of a 4-pole motor, while Fig. 1(b) shows the motor converted into a 6-pole arrangement by reversing the currents in the windings 2b, 3a, 3b and 4a as shown by the dashed lines. Thus, the stator windings are partly connected differently so as to vary the current in the windings, thereby to accomplish a pole change motor. While Fig. 1 shows, as an example, the arrangement of changing the direction of current, it is also possible to exchange phase currents and their directions. In the arrangement of Fig. 2b, the switch 7 is closed and switches 8 and 9 are kept open for operating the motor at a low speed, while the switch 7 is opened and switches 8 and 9 are closed so as to change the number of poles by varying the current for operating the motor at a high speed.

The correspondence of Figs. 1 and 2b in the change of the number of poles is as follows. Considering the current in phase R, the winding 61b of Fig. 2b is located between the terminal U2 and the neutral point O, and the current direction is not changed by switching. The winding 61b corresponds to the windings 1a, 1b, 2a and 4c of Fig. 1. The winding 61a is located between the terminals U1 and U2, causing the current direction to be changed by switching. The winding 61b corresponds to windings 2b, 3a, 3b and 4a and Fig. 1.

The rotational speed n of the motor is given as:

$$n = 120 \ f/P \ (RPM) \qquad (1)$$

where f represents the power frequency in Hertz, and P represents the number of poles of the motor. Accordingly, the motor speed can be varied by changing the number of poles. When the load of the motor varies, as in the case of a boiler blower which operates at a full load in the daytime and the load is reduced at night, the motor would be operated at a lower speed (in increased number of poles) to meet a light load at night and at a high speed (in decreased number of poles) to meet a heavy load in the daytime so as to minimize the total power consumption.

The speed of the pole change motor is varied by changing the states of the switches 7, 8 and 9, and the output of the motor is conducted through the shaft 12 to the blower 11. The difference between the reference airflow and the actual airflow is given as a control signal 13 to the airflow adjustment device 14, which moves the damper 14b through the bar 14a in accordance with the control signal 13 so as to control the amount of airflow.

In the conventional airflow control system arranged as described above, when the motor speed is varied from high to low or from low to high, the airflow variation caused by the change in the motor speed is not in accord with the airflow variation caused by the damper 14b during the transient period. Therefore, if the blower 11 is used for a boiler, the combustion of the boiler could be extinguished or the internal pressure of the boiler could rise to a critical point of explosion, and the use of a pole change motor in such applications has not been appropriate.

Summary of the Invention

It is an object of the present invention to provide an airflow control system capable of suppressing a sharp variation in the airflow at the change of poles of the blower motor, by matching the change in the speed of the blower motor with the change in the resistance of the air passage controlled by the airflow adjustment device.

According to the invention the airflow control system is characterized by a control variable generating means designated to control said air passage resistance control means in response to a command for changing the speed of said motor; and means for changing the speed of said motor upon expiration of a predetermined time length after said air passage resistance control means has been operated in response to said command, such that the airflow of said blower does not virtually vary when the speed of said motor is changed.

Brief Description of the Drawings

Fig. 1(a and b) is a set of illustrations showing the principle of a pole change motor;

Fig. 2(a) is a vertical cross-sectional view of a conventional airflow control system;

Fig. 2(b) is a schematic diagram of the pole change circuit used in the above system;

Fig. 3(a) is a brief vertical cross-sectional view of the airflow control system according to the present invention;

Fig. 3(b) is a schematic diagram of the pole change circuit used in the above inventive system;

Fig. 4 is a schematic diagram of the sequential circuit used for the system shown in Fig. 3(a and b); and

Fig. 5 is a graph showing the relationship between the opening of the damper and the amount of airflow of the system shown in Fig. 3.

Description of the Preferred Embodiments

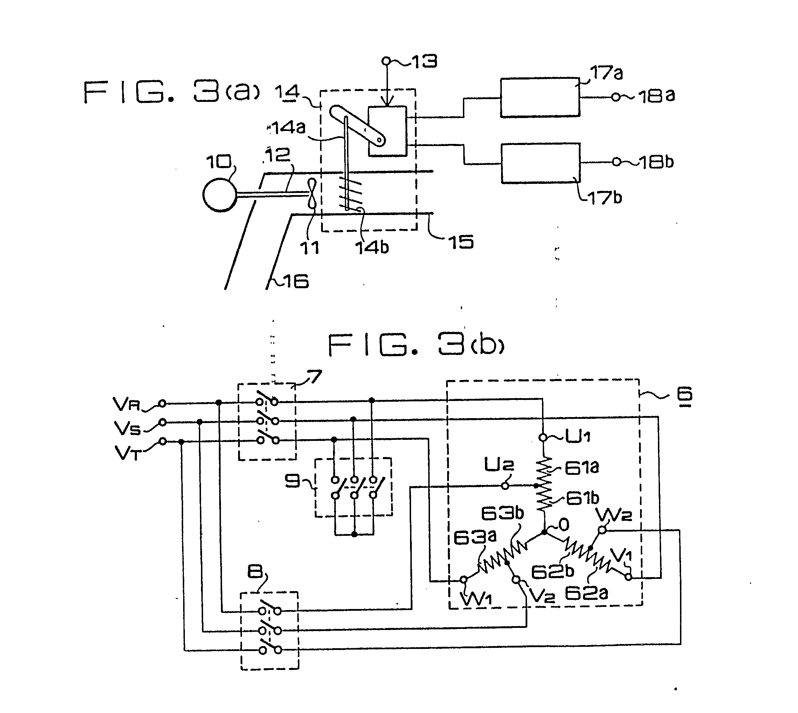

One embodiment of the present invention will now be described with reference to the drawings. In Fig. 3 reference numbers 17a and 17b denote preceding control variable generators, and reference numbers 18a and 18b denote activation signals given to the preceding control variable generators 17a and 17b. Other constituents referred to by common symbols with Fig. 2 are the counterparts.

Fig. 4 shows one embodiment of the sequential circuit explaining the timing relationship between the activation signals 18a and 18b of Fig. 3 and the pole change command to the pole change motor. The circuit includes relay windings 18a and 18b (the signals 18a and 18b in Fig. 3 are assumed to be active when the contacts of the relays 18a and 18b are closed), timers 18aT and 18bT, a pole change switch 19 having a high-speed and low-speed contacts 19a and 19b, respectively, making coils 7c, 8c and 9c of the switches 7, 8 and 9, trip coils 7T, 8T and 9T of the switches 7, 8 and 9, and control power lines 20 and 21 having positive and negative polarities, respectively.

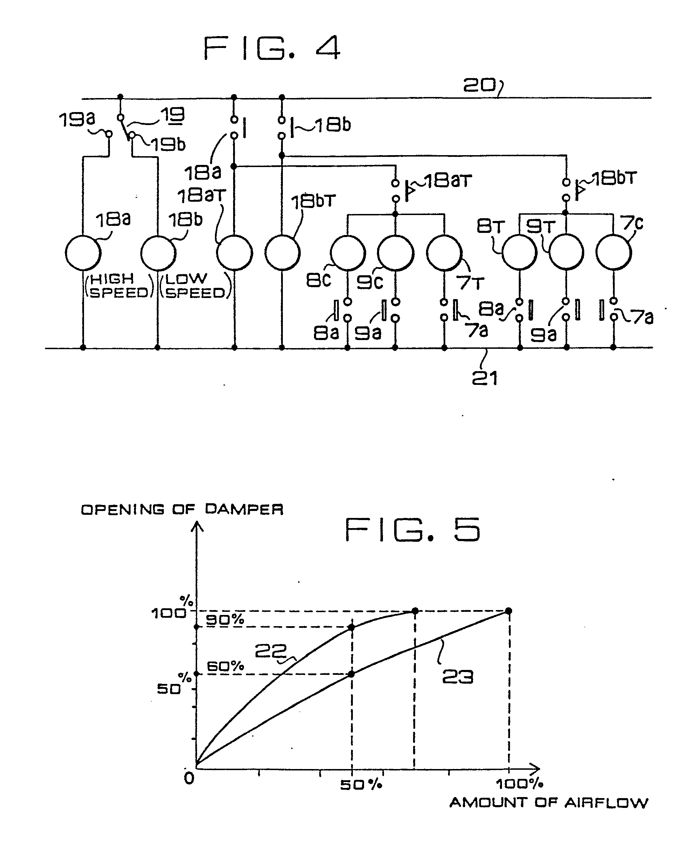

Fig. 5 shows the amount of airflow against the opening of the damper (it is fully open at 100% providing the minimum air passage resistance, and completely closed at 0% providing the maximum air passage resistance), plotted for two motor speeds as a parameter. On the graph, the curves 22 and 23 represent the characteristics of the preceding control variable generators 17a and 17b of Fig. 8 in the low-speed and high-speed operations, respectively.

In the conventional system of Fig. 2, pole change for the motor is carried out by the switches 7, 8 and 9 and the airflow control is left to the movement of the damper 14b, whereas the embodiment of the present invention shown in Fig. 3 performs as follows. When the pole change command is issued, one of the signals 18a and 18b is given so that a corresponding control variable generator 17a or 17b is activated. The control variable generators 17a and 17b are arranged such that a preset functional value is given to the airflow adjustment device 14 to more open or close the damper 14b. Upon expiration of a certain period after the signal 18a or 18b has been issued, switching signals are given to the switches 7, 8 and 9, and the number of poles of the motor is changed. This operation will be described in more detail in connection with Figs. 4 and 5.

In Fig. 4, when the pole change switch 19 is set to the contact 19b (as shown in the figure) to switch the motor speed from high to low, the relay 18b operates to provide the activation signal 18b of Fig. 3 and, at the same time, the timer 18bT starts counting. When the setup time of the timer 18bT has been spent, the trip coils 8T and 9T of the switches 8 and 9 are energized and, at the same time, the making coil 7c of the switch 7 is energized. Accordingly, the switches 7, 8 and 9 are brought to the closed, open and open states, respectively, and the motor is switched to the low speed. Similarly, when the switch 19 is set to the contact 19a, the activation signal 18a of Fig. 3 is provided so that upon expiration of the timer 18aT the switches 7, 8 and 9 are brought to closed, closed and open states, respectively, and the motor speed is switched to high. In this way, the signals 18a and 18b of Fig. 3 are given in advance of commands to the switches 7, 8 and 9 for changing the number of poles of the motor.

The control variable generators 17a and 17b will be described in detail in connection with Fig. 5. The motor has two speeds providing certain amounts of airflow, and thus proper openings of the damper for these speeds are also known. For example, when the blower is operated at 50% airflow, the damper opening is 90% at the lower motor speed or 60% at the higher motor speed, as can be seen from the curves 22 and 23 on the graph of Fig. 5. Considering now the high-speed operation is switched to the low-speed operation, the control variable generator 17b is set to provide a change of damper opening of 60% − 90% = −30%. Conversely, when the motor speed is switched from low to high, the control variable generator 17a is set to provide a change of damper opening of +80%.

Although in the foregoing embodiment the boiler blower with damper control has been described, another airflow adjustment device such as a vane control device may be employed, and the blower may be used for other purpose than boiler.

Although separate control variable generators 17a and 17b for the high-speed and low-speed operations have been described, they may be integrated, or their functions may be carried by the control signal 13.

Although in the foregoing description, for purposes of simplicity, the control variable generators 17a and 17b provide their outputs on expiration of a certain period through the use of the timers 18aT and 18bT in Fig. 4 in advance of the operational commands to the switches 7, 8 and 9, the timing may be determined variably in terms of the airflow and initial damper opening so as to meet the time needed to adjust the damper that depends on the amount of airflow.

According to the present invention, as described above, the airflow adjustment device which responds slower is operated in advance of the change in the number of poles of the motor, whereby the change of airflow caused by the change in the motor speed is in accord with the change in the airflow caused by the airflow adjustment device, and the application range of the pole change motor can be extended. Thus, the power-save motor operation can be accomplished at a low cost.

## Claims

1. An airflow control system comprising a pole change motor capable of varying the rotational speed by changing the number of poles carried out through the change in the magnitude or direction of a current flowing in part of stator windings; a blower driven by said motor; an air passage resistance control means provided within the air passage of said blower; characterized by a control variable generating means (17a, 17b) designated to control said air passage resistance control means (14) in response to a command for changing the speed of said motor (10); and means (7, 8, 9) for changing the speed of said motor (10) upon expiration of a predetermined time length after said air passage resistance control means (14) has been operated in response to said command, such that the airflow of said blower (11) does not virtually vary when the speed of said motor (10) is changed.

2. An airflow control system according to claim 1, wherein said command for changing the motor speed comprises a command (18b) of changing from a low speed to a high speed and a command (18a) of changing from a high speed to a low speed, said control variable generating means (17a, 17b) operating on said air passage resistance control means (14) so as to reduce the air passage resistance in response to said low-to-high speed change command (18b), or to increase the air passage resistance in response to said high-to-low speed change command (18a).

## Patentansprüche

1. Luftströmungssteuersystem mit einem polumschaltbaren Motor, mit dem die Drehzahl durch Verändern der Anzahl von Polen aufgrund der Veränderung von Amplitude oder Richtung eines Stromes in einem Teil der Statorwicklungen veränderbar ist; mit einem durch den Motor angetriebenen Lüfter und einer Luftkanalwiderstandssteuereinrichtung innerhalb des Luftkanals des Lüfters; gekennzeichnet durch einen Generator (17a, 17b) zum Erzeugen einer Steuervariablen zum Steuern der Luftkanalwiderstandssteuereinrichtung (14) abhängig von einem Befehl zum Umschalten der Drehzahl des Motors (10); und Mittel (7, 8, 9) zum Umschalten der Drehzahl des Motors (10) nach Ablauf einer vorbestimmten Zeitdauer nach dem Betätigen der Luftkanalwiderstandssteuereinrichtung (14) abhängig von dem Befehl, derart, daß die Luftströmung des Lüfters (11) sich im wesentlichen nicht ändert, wenn die Drehzahl des Motors (10) umgeschaltet wird.

2. Luftströmungssteuersystem nach Anspruch 1, dadurch gekennzeichnet, daß der Befehl zum Umschalten der Drehzahl aus einem Umschaltbefehl (18b) zum Umschalten von einer niedrigeren auf eine höhere Drehzahl und einem Umschaltbefehl (18a) zum Umschalten von einer höheren auf eine niedrigere Drehzahl besteht, daß der Generator (17a, 17b) zum Erzeugen der Steuervariablen auf die Luftkanalwiderstandssteuereinrichtung (14) derart einwirkt, daß der Luftkanalwiderstand abhängig vom Niedrig-auf-Hochdrehzahl-Umschaltbefehl (18b) erniedrigt und abhängig vom Hoch-auf-Niedrigdrehzahl-Umschaltbefehl (18a) erhöht wird.

## Revendications

1. Système de commande d'un flux d'air, comprenant un moteur à nombre de pôles modifiable dont la vitesse de rotation peut varier par suite d'une modification du nombre de pôles, obtenue par une modification de l'amplitude ou du sens de circulation d'un courant dans une partie des enroulements du stator; un ventilateur entraîné par ledit moteur; un moyen de réglage de la résistance au passage de l'air prévu à l'intérieur du conduit d'air dudit ventilateur; caractérisé par un moyen de génération de commande variable (17a, 17b) destiné à commander ledit moyen de réglage de la résistance au passage de l'air (14) en réponse à un ordre de modification de la vitesse dudit moteur (10); et des moyens (7, 8, 9) pour modifier la vitesse dudit moteur (10) à l'expiration d'une période de temps prédéterminée, après que ledit moyen de réglage de la résistance au passage de l'air (14) a été mis en action en réponse audit ordré, de telle façon que le flux d'air produit par ledit ventilateur (11) ne varie pas de façon sensible lorsque la vitesse dudit moteur (10) est modifiée.

2. Système de commande d'un flux d'air selon la revendication 1, dans lequel l'ordre de modification de la vitesse du moteur comprend un ordre (18b) de passage d'une vitesse faible à une vitesse élevée et un ordre (18a) de passage d'une vitesse élevée à une vitesse faible, ledit moyen de génération de commande variable (17a, 17b) agissant sur ledit moyen de réglage de la résistance au passage de l'air (14) de façon à réduire la résistance au passage de l'air en réponse à l'ordre (18b) de passage de la vitesse faible à la vitesse élevée, ou à augmenter la résistance au passage de l'air en réponse à l'ordre (18a) de passage de la vitesse élevée à la vitesse faible.

# FIG. 1 (a)

## (PRIOR ART)

# FIG. 1 (b)

## (PRIOR ART)

FIG. 2 (a)
(PRIOR ART)

FIG. 2 (b)
(PRIOR ART)

0 137 156

# FIG. 3(a)

13

14

14a

17a

18a

18b

17b

10  12

14b

11  15

16

# FIG. 3(b)

7

61

$V_R$

$V_S$

$V_T$

$U_1$

$U_2$

61a

61b

9

63b

63a

0

$W_2$

$V_1$

8

$W_1$  $V_2$ 62a

62b

# FIG. 4

# FIG. 5

OPENING OF DAMPER

AMOUNT OF AIRFLOW